# EUROPÄISCHE PATENTANMELDUNG

(11) **EP 2 596 860 A1**
(43) Veröffentlichungstag der Anmeldung: **29.05.2013**
(21) Anmeldenummer: 11190732.5
(22) Anmeldetag: 25.11.2011
(51) Int. Cl.: B01J 19/00, B01J 19/24

(54) **Mit einem Wärmetauscher versehener Kreislaufreaktor**

(71) Anmelder: Fluitec Invest AG, 8442 Hettlingen (CH)
(72) Erfinder: Georg, Alain, 8442 Hettlingen (CH); Andreoli, Silvano, 8406 Winterthur (CH); Vögeli, Tobias, 8400 Winterthur (CH); Altenburger, Daniel, 8427 Freienstein (CH); Eiholzer, Adrian, 8630 Rüti (CH)
(74) Vertreter: Liebetanz, Michael

(57) **Zusammenfassung**

Kreislaufreaktor zur kontinuierlichen Durchführung und Kontrolle von Reaktionen in flüssigen und/oder gasförmigen Medien, wobei der Reaktor mindestens eine Rohrleitung (2) mit einem Rohranfang (3) sowie einem Rohrende (4) und mindestens einen in der Rohrleitung (2) angeordneten statischen Mischer-Wärmetauscher (1) mit einem in der Rohrleitung (2) angeordneten Wärmetauscher sowie in der Rohrleitung (2) angeordneten statischen Mischelementen umfasst. Der Wärmetauscher weist eine Wärmetauscheroberfläche (A₁) und ein Leervolumen (V₁), das durch die Länge des Wärmetauschers entlang der Rohrleitung (2) und den Querschnitt des Rohrabschnitts über diese Länge definiert ist, auf. Die Rohrleitung (2) weist an mindestens einer Stelle zwischen dem Rohranfang (3) und dem Rohrende (4) eine Rückführung mit einer Pumpe (5) auf. Das Verhältnis (A₁/V₁) zwischen der Wärmetauscheroberfläche (A₁) und dem Leervolumen (V₁) ist mindestens doppelt so gross als das Verhältnis (A₂/V₂) eines bezüglich Leervolumens (V₂) baugleichen Rohrreaktors mit statischen Mischelementen und einem das Leervolumen (V₂) umhüllenden Wärmetauscher, welcher die Wärmetauscheroberfläche (A₂) definiert.

## Beschreibung

### TECHNISCHES GEBIET

Die Erfindung bezieht sich auf einen Kreislaufreaktor nach dem Oberbegriff von Anspruch 1 zur kontinuierlichen Durchführung und Kontrolle von Reaktionen in flüssigen und/oder gasförmigen Medien mit einem Mischer, mit einem Wärmetauscher und mit einer Pumpe, wobei der Kreislaufreaktor mindestens eine Rohrleitung mit einem Rohranfang sowie einem Rohrende und mindestens einen in der Rohrleitung angeordneten Mischer umfasst, wobei der Wärmetauscher ein von den Medien durchflossenes Leervolumen und eine an das Leervolumen angrenzende Wärmetauscheroberfläche aufweist, wobei die Rohrleitung an mindestens einer Stelle zwischen dem Rohranfang und dem Rohrende eine Rückführung mit einer Pumpe aufweist.

### STAND DER TECHNIK

Ein chemischer Reaktor ist der Teil einer Anlage, in dem chemische Prozesse ablaufen und in dem chemische Umsetzungen durchgeführt werden. Solche Reaktoren werden in Batch-Prozessen, bei welchem beispielsweise eine bestimmte Menge eines Produktes pro Produktionszyklus produziert werden, oder aber in einer kontinuierlichen Betriebsweise betrieben.

Das Umstellen eines Batch-Prozesses auf die kontinuierliche Betriebsweise bietet verschiedene entscheidende Vorteile, wie erhöhte Sicherheit, konstante Produktqualität und maximale Wirtschaftlichkeit. Die kontinuierliche Produktionsweise erfordert jedoch bereits in der Planungsphase die Berücksichtigung verschiedenster Einflussgrössen wie Kinetik, Thermodynamik, Selektivität und Energieflüsse. Wenn diesen Schlüsselgrössen ausreichend Rechnung getragen wird, lässt sich eine kontinuierliche Reaktion sicher, konstant und mit grösstmöglichen Raum/Zeit-Ausbeuten führen. Einmal in Betrieb genommen, bieten kontinuierliche Verfahren mehrere entscheidende Vorteile wie:
- verbesserte Reaktionskontrolle
- kleines Reaktionsvolumen
- keine Totzonen
- stabile Betriebsweise
- keine Reinigungs- und Beschickungszeiten
- geringer Platzbedarf, etc.

Mit entsprechend gestalteten Experimenten im Reaktionskalorimeter, Rührwerksreaktor oder gar im einfachen Becherglas lassen sich eine Fülle von technischen Informationen über die Zusammenhänge gewinnen wie: Reaktionsgeschwindigkeit (Kinetik), Wärmetönung und das chemische Gleichgewicht (Thermodynamik), Selektivität, Umsatz, Nebenprodukte, Viskositätsverlauf, erforderliche Energiedissipation zur Mischung, Temperaturabhängigkeit der Reaktionsgeschwindigkeit nach Arrhenius, etc.

Die Daten aus dem Batch-Reaktor können auf kontinuierlich arbeitende Rohrreaktoren übertragen werden. Unter Berücksichtigung der Mischeffizienz sowie der Wärmeströme wird die Reaktionszeit im Batch-Reaktor zur Verweilzeit im kontinuierlichen Rohrreaktor. Im kontinuierlich geführten Rohrreaktor lässt sich der Zeitpunkt der grössten Wärmeentwicklung örtlich präzise voraussagen. Volumen, Verweilzeit, spezifische Oberfläche und Wärmeabfuhr lassen sich aber nur mittels Kaskaden oder Kreislaufreaktoren weitgehend uneingeschränkt realisieren.

Bei sehr hohen Wärmetönungen müssen Kreislaufreaktoren verwendet werden, welche eine vollständige Rückvermischung aufweisen und durch die die Rezirkulation einen Verdünnungseffekt bewirkt. Dies kann sich dabei negativ auf die Selektivität und die dabei erzielte Raum/Zeit-Ausbeutung auswirken. Aus diesem Grund werden Kreislaufreaktoren auch zusätzliche Verweilzeitstrecken mit minimaler Rückmischung nachgeschaltet.

Kontinuierliche Kreisreaktoren werden seit Jahren beispielsweise für folgende Reaktionen eingesetzt: Polymeraufbereitung, Veresterungen, Nitrierungen, Diazotierungen, Umlagerungen, Alkylierungen, Halogenierungen, Hydrierungen, Oxidierungen, Polymerisationen, Neutralisationen, etc.

Der hier verwendete Begriff Kreislaufreaktor leitet sich aus der Reaktionstechnik ab, wo Loop-Reaktoren, resp. Kreislaufreaktoren zur Überwachung exothermer Reaktionen weit verbreitet sind.

Solche Kreislaufreaktoren beinhalten typischerweise eine Pumpe mit einem Umlauf, dynamische oder statische Mischer und/oder zusätzliche Wärmetauscher wie beispielsweise Platten- oder Rohrbündelwärmetauscher für die Wärmeabfuhr. Ein hoher Wärmeübergang bei gleichzeitiger grösstmöglicher Mischleistung kann eine Reduktion der Kreislaufrate im kontinuierlichen Rohrreaktor bewirken, was sich sofort auf die Reaktion, den Energieverbrauch und die Produktionskosten auswirkt. Übliche Verhältnisse aus Kreislaufrate zu gesamter Zulaufrate liegen im Bereich von 15 bis 100, was in vielen Fällen beim Scale-Up zu hoch ist und zu erheblichen Betriebs- und Pumpenkosten führt. Die Zulaufströme bestehen beispielsweise aus Edukten wie Monomeren, Katalysatoren, Lösungsmitteln, Initiatoren, Regulatoren, Additiven und / oder Stopper. Diese Additive werden nachfolgend auch als Reaktionspartner bezeichnet.

Weiter sind aus dem Stand der Technik rohrartige Gehäuse bekannt, welche mit mindestens einem darin angeordneten Mischeinsatz ausgerüstet sind, beispielsweise in Form von einer oder mehreren Stege und Schlitze aufweisenden Platte(n). Dabei erstrecken sich jeweils die Stege der einen Platte durch die Schlitze der anderen Platte kreuzend hindurch. Vorzugsweise sind die Platten zueinander und zur Achse des Rohres geneigt angeordnet. Zur Temperierung (Kühlung und/oder Heizung) beispielsweise ist das rohrartige Gehäuse mit einem Doppelmantel ausgerüstet, wobei der Wärmetauscher somit den Rohrmantel umgibt. In der Folge werden diese Reaktoren auch als baugleiche Reaktoren bezeichnet.

Die besagten baugleichen Reaktoren bzw. geometrisch ähnliche statische Mischer-Wärmetauscher zeichnen sich generell dadurch aus, dass das Verhältnis aus Wärmeaustauschoberflächen zum Leervolumen, auch als A/V-Verhältnis bezeichnet, mit zunehmendem Rohrdurchmesser abnimmt. Im Falle eines Scale-Up nimmt daher die Wärmeaustauschleistung dramatisch ab. Daher eignen sich statische Mischer mit Mantel nur für kleine Durchsätze oder man erhöht den Rezirkulationsstrom massiv, was sich in der Regel negativ auf die Energiebilanz und das Endprodukt auswirkt. Eine weitere Möglichkeit besteht in der Parallelisierung der Ströme, was zu einem erhöhten dosier- und regelungstechnischen Aufwand führt.

Wird das mit den Mischelementen ausgestattete Strömungsrohr zusätzlich mit einem innen angeordneten Rohrbündel ausgerüstet, so kann das Verhältnis aus Wärmeaustauschfläche zum Leerrohrvolumen, auch als A/V-Verhältnis bezeichnet, trotz zunehmendem Rohrdurchmesser konstant oder zumindest sehr gross gehalten werden. Der innen angeordnete Rohrbündel besteht aus zusätzlichen kleinen Wärmetauschrohren, welche innen mit Wärmeträgerflüssigkeit für den Wärmeaustausch durchströmt sind. Allerdings verschlechtern jedoch innen angeordnete Rohrbündel die Mischleistung dramatisch.

So weist beispielsweise der Wärmetauscher nach der DE 2839563 eine sehr geringe Mischleistung auf, zumal die Rohrbündel jeweils nur in eine Achsrichtung zu mischen vermögen. Es müssen also mehrere Bündel um 90° verdreht in Serie geschaltet werden, um überhaupt eine Mischleistung zu erzielen. Für solche Apparate ist die Bezeichnung statischer Mischer-Wärmetauscher grundsätzlich falsch. Besser geeignete statische Mischer-Wärmetauscher sind beispielsweise solche vom Typ CSE-XR. Bei diesen Mischer-Wärmetauschern ist die Mischleistung durch die Anordnung der Bleche einstellbar. Ein statischer Mischer-Wärmetauscher dieser Art ist aus EP 1 067 352 B1 und WO 2008/141472 bekannt.

Für den Vergleich der Mischleistung setzt man generell die relative Standardabweichung S/Sₒ oder den Variationskoeffizienten COV ein. Bei diesen bekannten Mischgütemassen ist zu beachten, dass sich nur Messresultate bei gleichen Messanalysen erfassen lassen. In der Literatur findet man Messungen mittels Leitfähigkeitsmessung, Entfärbung, laserinduzierter Fluoreszenz (LIF) oder mittels fotometrischer Analyse FIP (Fluitec Image Processing). Es dürfen also nur Messungen mit gleichen Methoden verglichen werden, da sonst erhebliche Abweichungen entstehen. Erzielt ein statischer Mischer-Wärmetauscher im laminaren Strömungsbereich mittels fotometrischer Analyse bei einem L/D-Verhältnis von mindestens 20 eine relative Standardabweichung S/S₀ von 0.05, so kann von einem gut mischenden statischen Mischer-Wärmetauscher gesprochen werden. Vorzugsweise erzielen statische Mischer-Wärmetauscher eine relative Standardabweichung S/S₀ von 0.05 bei einem L/D-Verhältnis von mindestens 12.

### DARSTELLUNG DER ERFINDUNG

Der Erfindung liegt die Aufgabe zugrunde, einen verbesserten kontinuierlich arbeitenden und mit einem Wärmetauscher versehenen Kreislaufreaktor, insbesondere umfassend einen Rohrreaktor, zu schaffen, welcher die vorstehend erwähnten Nachteile nach dem Stand der Technik ausräumt. Insbesondere soll der Rohrreaktor eine verbesserte Leistung bezüglich des Mischverhaltens und des Wärmetausches während der Reaktion aufweisen.

Eine solche Aufgabe löst der Gegenstand von Anspruch 1, indem der verwendete Mischer ein statischer Mischer mit integriertem Wärmetauscher ist, bei dem die Mischelemente an das Leervolumen (V₁₎ angrenzen und einen wesentlichen Anteil der Wärmetauscheroberfläche (A₁) bilden.

Vorzugsweise umfasst ein Kreislaufreaktor zur kontinuierlichen Durchführung und Kontrolle von Reaktionen in flüssigen und/oder gasförmigen Medien, mindestens eine Rohrleitung mit einem Rohranfang sowie einem Rohrende und mindestens einen in der Rohrleitung angeordneten statischen Mischer-Wärmetauscher mit einem in der Rohrleitung angeordneten Wärmetauscher sowie in der Rohrleitung angeordneten statischen Mischelementen. Der Wärmetauscher definiert eine Wärmetauscheroberfläche und ein Leervolumen, das durch die Länge des Wärmetauschers entlang der Rohrleitung und den Querschnitt des Rohrabschnitts über diese Länge definiert ist, auf. Die Rohrleitung weist an mindestens einer Stelle zwischen dem Rohranfang und dem Rohrende eine Rückführung mit einer Pumpe auf, was die kontinuierliche Betriebsweise ermöglicht. Weiter ist das Verhältnis zwischen der Wärmetauscheroberfläche und dem Leervolumen des besagten Mischer-Wärmetauscher mindestens doppelt, besonders bevorzugt mindestens vierfach, so gross als das Verhältnis eines bezüglich Leervolumens baugleichen Rohrreaktors mit statischen Mischelementen und einem das Leervolumen umhüllenden Wärmetauscher, welcher die Wärmetauscheroberfläche definiert.

Durch die Wahl des entsprechenden Verhältnisses weist der Rohrreaktor verbesserte Wärmetauscheigenschaften auf. Zudem wird die Leistung des Reaktors bezüglich des Mischverfahrens ebenfalls positiv beeinflusst. Folglich kann die Mischleistung insgesamt erhöht werden. Weiter erlaubt die Wahl des entsprechenden Verhältnisses eine Skalierung der Anlage.

Der Kreislaufreaktor kann aus einem Rohrreaktor und einer Stoffrückführung bestehen. Mit einem kontinuierlichen Kreislauf kann eine Reaktionsführung mit den Eigenschaften zwischen einem Rohrreaktor und einem ideal durchmischten Rührkesselreaktor erreicht werden.

Vorzugweise wird das ganze Volumen des Kreislaufreaktors mit statischen Mischer-Wärmetauschern ausgefüllt, so dass über den ganzen Rohrreaktor die Wärmeabfuhr gewährleistet ist.

Vorzugsweise definiert sich das Leervolumen aus dem Volumen des Rohres bzw. des entsprechenden Rohrabschnittes abzüglich dem Volumen des statischen Mischelementes, abzüglich des Volumen des im Rohrabschnitt angeordneten Wärmetauschers und falls vorhanden abzüglich des zusätzlichen Volumen bestehend aus den kleinen Rohren. Das Volumen des Rohres definiert sich aus der Länge des Rohrabschnittes, über welchen sich der Wärmetauscher und der statische Mischer erstrecken, und aus der Querschnittsfläche des Rohres über diesen Abschnitt.

Unter einem baugleichen Reaktor wird typischerweise ein Reaktor verstanden, welcher in einem Rohrabschnitt einen statischen Mischer und einen diesen Rohrabschnitt umhüllenden bzw. umgebenden Wärmetauscher umfasst. Der Wärmetauscher umgibt also im Wesentlichen den Rohrabschnitt, welcher gemäss obiger Definition das Leervolumen entsprechend bestimmt. Der Wärmetauscher kann dabei als rohrartiges Gehäuse mit einem Doppelmantel bereitgestellt werden.

Der Mischeinsatz des statischen Mischer ist vorzugweise in Form von einer oder mehreren Stege und Schlitze aufweisenden Platten bereitgestellt, die das Leervolumen vermindern. Dabei erstrecken sich jeweils die Stege der einen Platte durch die Schlitze der anderen Platte kreuzend hindurch. Vorzugsweise sind die Platten zueinander und zur Achse des Rohres geneigt angeordnet.

Vorzugsweise umhüllt der das Leervolumen umhüllende Wärmetauscher des baugleichen Reaktors das Leervolumen vollständig.

Vorzugsweise ist an mindestens einer Stelle zwischen dem Rohranfang und dem Rohrende eine in das Rohrinnere mündende Zuführung für mindestens einen zusätzlichen Zulaufstrom angeschlossen ist. Durch diese Zuführung können weitere Stoffe in den Mischprozess eingebracht werden.

Bevorzugterweise weist der statische Mischer-Wärmetauscher mindestens einen gekühlten Abschnitt oder mindestens einen beheizten Abschnitt auf. Somit kann die Reaktion also gekühlt oder aber beheizt werden.

Vorzugsweise ist an die Rückführung mit der Pumpe mindestens eine in die Rückführung mündende Zuführung für mindestens einen zusätzlichen Zulaufstrom angeschlossen, was den Vorteil hat, dass über die Rückführung weitere Stoffe der Reaktion beigebbar sind.

Der Wärmetauscher kann in einem vorteilhaftern Ausführungsbeispiel neben den in den statischen Mischerelementen integrierten Wärmetauscherelementen auch einen das Rohr des Reaktors umgebenden Mantelwärmetauscher umfassen.

Weitere Ausführungsformen sind in den abhängigen Ansprüchen angegeben.

Weitere Vorteile der vorliegenden Erfindung ergeben sich aus dem folgenden:
Der erfindungsgemässe Kreislaufreaktor soll für langsame, normale und schnelle Reaktionen in allen Strömungsbereichen, vorzugsweise im laminaren Strömungsbereich, eingesetzt werden können und eine weitgehend sofortige und vollständige Durchmischung gewährleisten. Eine praktische Klassifikation der Reaktionsgeschwindigkeit greift auf die Halbwertszeit t_{H} zurück. Das ist die Zeit t_{H} nach der das Edukt bei einer bestimmten Temperatur zur Hälfte abreagiert ist, also den Umsatz Ui = 0.5 erreicht hat. Man bezeichnet Reaktionen mit:
   - t_{H} > 1 min als langsam
   - 1 s < t_{H} < 1 min als normal
   - 1ms < t_{H} <1 s als schnell
   - t_{H} <lms als sehr schnell.

Die einzige zusätzliche beeinflussende Grösse ist in diesem Fall nur die noch Mischeffizienz des verwendeten Reaktors. Besonders bei mehrphasigen Reaktionen (flüssig/flüssig oder gas/flüssig) oder bei der Verwendung von festen oder dispergierten Katalysatoren ist die innige Vermischung sehr wichtig, weil der Stofftransport durch die verschiedenen stationären Grenzschichten limitiert ist. Für solche reaktive Aufgaben in einem Kreislaufreaktor ist ein statischer Mischer besonders geeignet. Ein statischer Mischer-Wärmetauscher eignet sich auch für das Einmischen der Reaktionspartner in einen Kreislaufreaktor.

### KURZE BESCHREIBUNG DER ZEICHNUNGEN

Weitere Vorteile, Merkmale und Einzelheiten der Erfindung ergeben sich aus der nachfolgenden Beschreibung bevorzugter Ausführungsbeispiele sowie anhand der Zeichnung, die lediglich zur Erläuterung dient und nicht einschränkend auszulegen ist. Die Zeichnung zeigt schematisch in
- Fig. 1: einen Kreislaufreaktor mit einem statischen Mischer-Wärmetauscher; und
- Fig. 2: einen Kreislaufreaktor mit drei statischen Mischer-Wärmetauschern der im Kreislauf zusätzlich zwei Absperrarmaturen und zwei Spülventile aufweist.

### BESCHREIBUNG BEVORZUGTER AUSFÜHRUNGSFORMEN

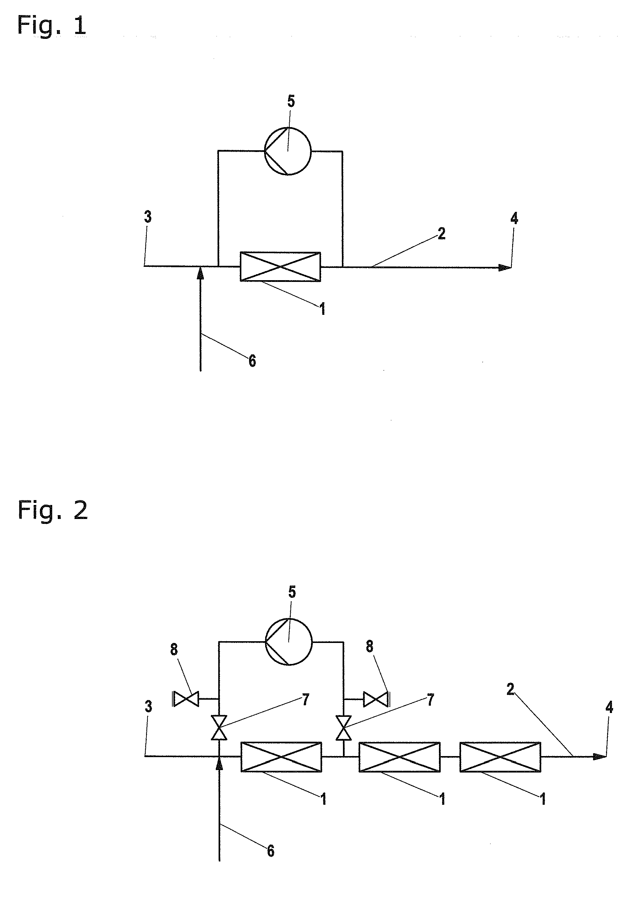

Fig. 1 zeigt einen Kreislaufreaktor zur kontinuierlichen Durchführung und Kontrolle von langsamen, normalen und schnellen, exothermen Reaktionen in flüssigen und/oder gasförmigen Medien.

Der Kreislaufreaktor zur kontinuierlichen Durchführung und Kontrolle von Reaktionen in flüssigen und/oder gasförmigen Medien umfasst mindestens eine Rohrleitung 2 mit einem Rohranfang 3 sowie einem Rohrende 4 und mindestens einen in der Rohrleitung 2 angeordneten statischen Mischer-Wärmetauscher 1. Der statische Mischer-Wärmetauscher umfasst einen in der Rohrleitung 2 angeordneten Wärmetauscher sowie in der Rohrleitung 2 angeordneten statischen Mischelemente. Wärmetauscher und Mischer sind somit im Rohrinneren angeordnet und kommen so in den direkten Kontakt mit den zu mischenden und zu temperierenden Stoffen. Als ein solcher statischer Mischer-Wärmetauscher kann beispielhaft gemäss EP 1 067 352 oder WO 2008/141472 ausgestaltet sein. Der Wärmetauscher dient dabei dem Austausch von Wärme zwischen dem in der Rohrleitung strömenden Fluids und die statischen Mischelemente dienen der Vermischung des Fluids.

Der Wärmetauscher weist eine Wärmetauscheroberfläche A₁ und ein Leervolumen V₁ auf. Die Wärmetauscheroberfläche wird durch die für den Wärmeaustausch eingesetzte Oberfläche definiert. Das Leervolumen wird durch die Länge des Wärmetauschers entlang der Rohrleitung 2 und den Querschnitt des Rohrabschnittes über diese besagte Länge festgelegt. Das Leervolumen entspricht dem Volumen des Rohres abzüglich dem Volumen des eingesetzten statischen Mischelementes mit integriertem Wärmetauscher. Der Wärmetauscher erstreckt sich demnach über die besagte Länge entlang des Rohrabschnittes.

Zwischen der Wärmetauscheroberfläche A₁ und dem Leervolumen V₁ lässt sich ein Verhältnis A₁/V₁ bilden. Das Verhältnis A₁/V₁ zwischen der Wärmetauscheroberfläche A₁ und dem Leervolumen V₁ des besagten Mischer-Wärmetauscher ist dabei mindestens doppelt, besonders bevorzugt mindestens vierfach, so gross ist als das Verhältnis A₂/V₂ eines bezüglich Leervolumens V₂ baugleichen Rohrreaktors mit statischen Mischelementen und einem das Leervolumen V₂ umhüllenden Wärmetauscher, welcher die Wärmetauscheroberfläche A₂ definiert.

Unter einem das Leervolumen V₂ umhüllenden Wärmetauscher wird im Wesentlichen ein Mantelwärmetauscher verstanden, welcher sich vollständig um einen entsprechenden Rohrabschnitt herum erstreckt. Üblicherweise handelt es sich dabei um einen Mantelwärmetauscher, welcher sich auf der Aussenseite des Rohrabschnittes um denselben herum erstreckt.

Mit anderen Worten kann auch gesagt werden, die Wärmeaustauschoberflächen A₁ zum Leervolumenverhältnis V₁des Mischer-Wärmetauschers mindestens doppelt, besonders bevorzugt mindestens vierfach so gross ist, als das eines in Länge und Aussenrohrdurchmesser vergleichbaren Rohrreaktors mit statischen Mischelementen.

Wie in der Figur 1 erkannt werden kann, weist die Rohrleitung 2 an mindestens einer Stelle zwischen dem Rohranfang 3 und dem Rohrende 4 eine Rückführung mit einer Pumpe 5 aufweist. Die Rückführung mündet dabei zwischen Rohranfang 3 und Mischer-Wärmetauscher 1 sowie zwischen Mischer-Wärmetauscher 1 und Rohrende 4 in die Rohrleitung 2. Somit kann der Rohrreaktor kontinuierlich im Kreislauf betrieben werden.

Der Kreislaufreaktor kann an einem beliebigen Ort der Rohrleitung 2 mindestens eine Zuführung 6 für mindestens einen zusätzlichen Zulaufstrom aufweisen. Die Rückführung kann auch zusätzliche Zuführungen aufweisen. Die Zulaufströme bestehen beispielsweise aus Edukten wie Monomeren, Katalysatoren, Lösungsmittel, Initiatoren, Regulatoren, Additiven und / oder Stopper. Diese Additive werden nachfolgend auch als Reaktionspartner bezeichnet.

Fig. 2 zeigt einen Kreislaufreaktor zur kontinuierlichen Durchführung und Kontrolle von langsamen, normalen, schnellen und exothermen Reaktionen in flüssigen und / oder gasförmigen Medien. Gleiche Teile sind dabei mit gleichen Bezugszeichen versehen und weisen die gleichen Eigenschaft auf, wie anhand der Figur 1 beschrieben.

Der Reaktor nach der Figur 2 besteht aus mindestens einer Rohrleitung 2, einer Rückführung mit einer Pumpe 5, mindestens einem statischen Mischer-Wärmetauscher 1 in der Rückführung und mindestens einem statischer Mischer-Wärmetauscher 1 nach der Rückführung mit der Pumpe 5. Diese statischen Mischer-Wärmetauscher 1 weisen dabei bezüglich der oben beschriebenen Verhältnisse die gleichen Eigenschaften auf, wie der statische Mischer-Wärmetauscher 1 nach der Figur 1. Die Rückführung mit der Pumpe 5 besitzt mindestens einen Zulauf unmittelbar nach der Pumpe 5 und direkt vor dem ersten statischen Mischer-Wärmetauscher. An dieser Stelle beginnt die Reaktionsführung, so dass die chemisch erzeugte, hohe Wärmetönung in der Schlaufe gut kontrolliert werden kann.

Die zwei Absperrarmaturen 7, welche vorzugweise totraumfrei am Anfang und am Ende der Rückführung vor dem Eintritt in die Rohrleitung 2 positioniert sind, können im kontinuierlichen Betrieb ganz oder teilweise geschlossen werden. Dies ermöglicht den Einsatz eines flexiblen kontinuierlichen Reaktors, der im Betrieb anstelle des Kreislaufreaktors auf einen kontinuierlichen Rohrreaktor oder auf eine kontinuierliche Reaktorkaskade umgestellt werden kann. Dies ist jedoch nur möglich, wenn das Verhältnis aus der Kreislaufrate zur gesamten Zulaufrate gering ist, da sonst der erste statische Mischer-Wärmetauscher 1 nicht für alle drei Reaktorschaltungen gleichzeitig verwendet werden kann. Mit anderen Worten kann die Rezirkulationsrate durch eine entsprechende Kontrolleinheit mit einer Zulaufsteuerung und Absperrarmatursteuerung eingestellt werden, wobei als Parameter Temperatursignale, Viskositätssignale oder andere Parameter zum Fortschritt der chemischen Umsetzung und Flussraten des Zuflusses Verwendung finden können.

Die Ventile 8 dienen zur Spülung und Reinigung der Rückführung mit der Pumpe 5, wenn auf den kontinuierlichen Rohrreaktor oder auf die kontinuierlichen Reaktorkaskade umgestellt wird.

### BEISPIELE

In der Folge werden Vergleichsbeispiele und Ausführungsbeispiele gemäss der Erfindung vorgestellt, um die sich ergebenden vorteilhaften A/V-Verhältnisse zu illustrieren.

Einem kontinuierlichen herkömmlichen Kreislaufreaktor, im Prinzip aufgebaut wie das Ausführungsbeispiel nach Fig. 1 aber mit statischen Mischern werden insgesamt 5 1 h⁻¹ Reaktionspartner zugeführt. Der herkömmliche Kreislaufreaktor wird hierin auch als baugleicher Reaktor bezeichnet. Der Kreislaufreaktor weist statische Mischer-Wärmetauscher vom Typ CSE-X der Firma Fluitec Georg AG mit einem Innendurchmesser von ø27.3 mm auf. Der Mischer besitzt eine Mantelbeheizung, also einen Mantelwärmetauscher. Der Kreislaufreaktor weist eine Rezirkulation von 75 1 h⁻¹ auf, die Reaktion eine Reaktionsenthalpie von 220 kJ kg⁻¹auf. 80% der Reaktion wird im Kreislaufreaktor umgesetzt. Die mittlere Verweilzeit beträgt 60 s für 80% Umsatz, der Druckverlust im Loop beträgt ca. 0.2 bar bei einer Viskosität von 1000 mPas. Das Verhältnis aus Kreislaufrate zur Zulaufrate liegt im Bereich von 15. Mit diesem Reaktoraufbau kann die Reaktion bei einer Wärmeübertragertemperatur von 7°C und einer Wärmeübertragermenge von 200 1 h⁻¹ isotherm kontrolliert werden. Das A/V-Verhältnis beträgt 209 m² m⁻³.

Es soll nun ein Scale-Up dieses Beispiels auf 500 1 h⁻¹ erfolgen, was einer Rezirkulationsrate von 7500 1 h⁻¹ entspricht. Der Kreislaufreaktor 2 weist statische Mischer-Wärmetauscher vom Typ CSE-X der Firma Fluitec Georg AG mit einem Innendurchmesser von ø68.8 mm auf. Der Mischer besitzt eine Mantelbeheizung. Die Reaktion weist eine Reaktionsenthalpie von 220 kJ kg⁻¹ auf. 80% der Reaktion wird im Kreislaufreaktor 2 umgesetzt. Die mittlere Verweilzeit beträgt 60 s für 80% Umsatz, der Druckverlust im Loop beträgt ca. 3.5 bar bei einer Viskosität von 1000 mPas. Das Verhältnis aus der Kreislaufrate zur Zulaufrate liegt im Bereich von 15. Mit diesem Reaktoraufbau, kann die Reaktion bei einer Wärmeübertragertemperatur von -32°C und einer Wärmeübertragermenge von 10000 1 h⁻¹ isotherm kontrolliert werden. Das A/V-Verhältnis beträgt 64 m² m⁻³. Das Verhältnis hat sich also durch den Scale-Up von 209 m⁻¹ auf weniger als 1/3 verschlechtert.

Es soll nun gemäss einem anderen Vergleichsbeispiel ein Scale-Up auf 500 1 h⁻¹ erfolgen, was einer Rezirkulationsrate von 7500 1 h⁻¹ entspricht, wenn der Kreislaufreaktor zu den statischen Mischer-Wärmetauscher vom Typ CSE-X der Firma Fluitec Georg AG mit einem Innendurchmesser von ø106.3 mm auch eine Mantelbeheizung aufweist. Die Reaktion weist eine Reaktionsenthalpie von 220 kJ kg⁻¹ auf. 80% der Reaktion wird im Kreislaufreaktor umgesetzt. Die mittlere Verweilzeit beträgt 60 s für 80% Umsatz, der Druckverlust im Loop beträgt ca. 0.2 bar bei einer Viskosität von 1000 mPas. Das Verhältnis aus der Kreislaufrate zur Zulaufrate liegt im Bereich von 15. Mit diesem Reaktoraufbau kann die Reaktion bei einer Wärmeübertragertemperatur von -130°C und einer Wärmeübertragermenge von 10000 1 h⁻¹ isotherm kontrolliert werden. Das A/V-Verhältnis beträgt 41.4 m² m⁻³. Es ist nur noch ca. ein Fünftel des nicht skalierten Beispiels.

Beim Scale-Up gemäss einem Ausführungsbeispiel der Erfindung auf 500 1 h⁻¹ mit einem statischen Mischer-Wärmetauscher vom Typ CSE-XR der Firma Fluitec Georg AG, mit einem Innendurchmesser von ø106.3 mm, ergibt sich tatsächlich eine Reduktion der Rezirkulationsrate auf 2500 1 h⁻¹. Da der Mischer-Wärmetauscher eine Mantelbeheizung sowie eine innere Rohrbündelbeheizung besitzt, erhöht sich das A/V-Verhältnis im Vergleich zu einem herkömmlichen statischen Mischer-Wärmetauscher von 41.4 m² m⁻³ auf 227 m² m⁻³, was mehr als einen Faktor 5 im besagten Verhältnis A₂/V₂ eines baugleichen Reaktors ergibt. Bei einem einfacheren Ausführungsbeispiel kann auf die Verwendung einer Mantelheizung für den Rohrreaktor verzichtet werden.

Die Reaktion besitzt eine Reaktionsenthalpie von 220 kJ kg⁻¹. 80% der Reaktion wird im Kreislaufreaktor 3 umgesetzt. Die mittlere Verweilzeit beträgt 60 s für 80% Umsatz, der Druckverlust im Loop beträgt ca. 1.0 bar bei einer Viskosität von 1000 mPas. Das Verhältnis aus der Kreislaufrate zur Zulaufrate liegt nur noch bei 5. Mit diesem Reaktoraufbau kann die Reaktion bei einer Wärmeübertragertemperatur von 23°C und einer Wärmeübertragermenge von 10000 1 h⁻¹ isotherm kontrolliert werden.

Für den Pilotmassstab bei 5 1 h⁻¹ funktionieren statische Mischer ausgezeichnet und bewähren sich für zahlreiche Anwendungen in der chemischen Reaktionstechnik. Beim Scale-Up muss auf Grund des abnehmenden A/V-Verhältnisses die Temperatur im Kreislauf drastisch reduziert werden, beispielsweise von 7°C auf -32°C oder gar auf -130°C. Dies führt dazu, dass für die Kühlung beispielsweise kein Wasser mehr eingesetzt werden kann, sondern beispielsweise Methanol oder Flüssiggas, was zu einem zunehmenden apparativen und regelungstechnischen Aufwand führt.

Mit Bezug zu Figur 2 kann folgendes angemerkt werden: Ein Kreislaufreaktor zur kontinuierlichen Durchführung und Kontrolle von langsamen, normalen, schnellen und exothermen Reaktionen in flüssigen und / oder gasförmigen Medien weist eine Rohrleitung 2 mit mindestens einer Rückführung mit einer Pumpe 5 auf, in der mindestens ein statischer Mischer-Wärmetauscher 1 angeordnet ist, dessen Wärmeaustauschoberflächen zum Leervolumenverhältnis mindestens doppelt, besonders bevorzugt mindestens vierfach so gross ist, als das eines in Länge und Aussenrohrdurchmesser vergleichbaren Rohrreaktors mit statischen Mischelementen.

## Patentansprüche

1. Kreislaufreaktor zur kontinuierlichen Durchführung und Kontrolle von Reaktionen in flüssigen und/oder gasförmigen Medien mit einem Mischer (1), mit einem Wärmetauscher und mit einer Pumpe (5),
wobei der Kreislaufreaktor mindestens eine Rohrleitung (2) mit einem Rohranfang (3) sowie einem Rohrende (4) und mindestens einen in der Rohrleitung (2) angeordneten Mischer umfasst,
wobei der Wärmetauscher ein von den Medien durchflossenes Leervolumen (V₁), und eine an das Leervolumen angrenzende Wärmetauscheroberfläche (A₁) aufweist,
wobei die Rohrleitung (2) an mindestens einer Stelle zwischen dem Rohranfang (3) und dem Rohrende (4) eine Rückführung mit einer Pumpe (5) aufweist,
**dadurch gekennzeichnet, dass** der Mischer (1) ein statischer Mischer mit integriertem Wärmetauscher ist, bei dem die Mischelemente an das Leervolumen (V₁) angrenzen und einen wesentlichen Anteil der Wärmetauscheroberfläche (A₁) bilden.

2. Kreislaufreaktor nach Anspruch 1, **dadurch gekennzeichnet, dass** der statische Mischer mit integriertem Wärmetauscher (1) die Gestalt eines Rohrreaktors hat, bei dem das Verhältnis (A₁/V₁) zwischen der Wärmetauscheroberfläche (A₁) und dem Leervolumen (V₁) des besagten Mischer-Wärmetauschers mindestens doppelt so gross ist als das Verhältnis (A₂/V₂) eines bezüglich Leervolumens (V₂) baugleichen Rohrreaktors mit statischen Mischelementen und einem das Leervolumen (V₂) umhüllenden Wärmetauscher, welcher die Wärmetauscheroberfläche (A₂) definiert.

3. Kreislaufreaktor nach Anspruch 1, **dadurch gekennzeichnet, dass** besagtes Verhältnis (A₁/V₁) mindestens vierfach so gross ist als das besagte Verhältnis (A₂/V₂) des baugleichen Reaktors.

4. Kreislaufreaktor nach einem der vorhergehenden Ansprüche, **dadurch gekennzeichnet, dass** der das Leervolumen umhüllende Wärmetauscher das Leervolumen vollständig umhüllt.

5. Kreislaufreaktor nach einem der vorhergehenden Ansprüche, **dadurch gekennzeichnet, dass** die Reaktionen langsame, normale, schnelle und/oder exotherme Reaktionen sind.

6. Kreislaufreaktor nach einem der vorhergehenden Ansprüche, **dadurch gekennzeichnet, dass** an mindestens einer Stelle zwischen dem Rohranfang (3) und dem Rohrende (4) eine in das Rohrinnere mündende Zuführung (6) für mindestens einen zusätzlichen Zulaufstrom angeschlossen ist.

7. Kreislaufreaktor nach einem der vorhergehenden Ansprüche, **dadurch gekennzeichnet, dass** der statische Mischer-Wärmetauscher (1) mindestens einen gekühlten Abschnitt aufweist, oder der statische Mischer-Wärmetauscher (1) mindestens einen geheizten Abschnitt aufweist.

8. Kreislaufreaktor nach einem der vorhergehenden Ansprüche, **dadurch gekennzeichnet, dass** an die Rückführung mit der Pumpe (5) mindestens eine in die Rückführung mündende Zuführung (6) für mindestens einen zusätzlichen Zulaufstrom angeschlossen ist.

9. Kreislaufreaktor nach einem der vorhergehenden Ansprüche, **dadurch gekennzeichnet, dass** die Rückführung mit der Pumpe (5) Absperrarmaturen (7) aufweist, mit denen die Rezirkulationsrate über die Rückführung einstellbar ist.

10. Kreislaufreaktor nach einem der vorhergehenden Ansprüche, **dadurch gekennzeichnet, dass** die Rückführung mit der Pumpe (5) mindestens ein Spülventil (8) aufweist.

11. Kreislaufreaktor nach einem der vorhergehenden Ansprüche, **dadurch gekennzeichnet, dass** der Wärmetauscher neben den in den statischen Mischerelementen integrierten Wärmetauscherelementen auch einen das Rohr des Reaktors umgebenden Mantelwärmetauscher umfasst.
